# EUROPEAN PATENT SPECIFICATION

(11) **EP 4 422 276 B1**
(45) Date of publication and mention of the grant of the patent: **09.12.2026**
(21) Application number: 24156073.9
(22) Date of filing: 06.02.2024
(51) Int. Cl.: H04W 36/00, H04W 36/08, H04W 76/18, H04W 76/19, H04W 36/36, H04W 40/24, H04W 40/36

(54) **MOBILITY IN WIRELESS COMMUNICATION SYSTEMS**
MOBILITÄT IN DRAHTLOSEN KOMMUNIKATIONSSYSTEMEN
MOBILITÉ DANS DES SYSTÈMES DE COMMUNICATION SANS FIL

(30) Priority: 24.02.2023 FI 20235225
(43) Date of publication of application: 28.08.2024
(73) Proprietor: Nokia Technologies Oy, 02610 Espoo (FI)
(72) Inventor: Koskinen, Jussi-Pekka, 90420 Oulu (FI); Turtinen, Samuli Heikki, 91100 Li (FI)
(74) Representative: Nokia EPO representatives

(56) References cited:
- US-A1- 2019 246 323
- US-A1- 2021 297 909

## Description

### TECHNOLOGICAL FIELD

Various example embodiments relate to wireless communication systems, and more particularly, to facilitating mobility within such wireless communication systems.

### BACKGROUND

As user equipment (UE) moves through a wireless communication system, it may move through cells that comprise regions of radio coverage that are supported by one or more network access node. Maintaining an ability for a UE to communicate effectively with the wireless communication system as it moves through regions of radio coverage is typically referred to as mobility. Layer 1 or layer 2, sometimes termed lower layer, triggered mobility is being increasingly considered to reduce the latency, overhead and interruption time associated with a UE moving between the different cells.

US 2021/297909 discloses a method and a device for receiving handover assistance information including a list of one or more candidate target cells; initiating a first random access procedure to a first candidate target cell of the one or more candidate target cells and a first timer for the first candidate target cell, when the first candidate target cell satisfies a handover condition; and stopping trying to connect to the first candidate target cell when any one of at least the following events occurs: (i) the first timer expires for the first candidate target cell, and (ii) a number of random access trials to the first candidate target cell reaches a maximum number.

US 2019/246323 discloses a method for performing a handover by a user equipment in a wireless communication system, and an apparatus supporting the same. The method may include: receiving information on candidate target cells for the handover and a handover condition, from a base station; initiating a handover to a first target cell among the candidate target cells, based on the handover condition; before detecting a failure of the handover to the first target cell, when channel quality of a second target cell among the candidate target cells is higher than channel quality of the first target cell, stopping the handover to the first target cell; and performing a handover to the second target cell.

### BRIEF SUMMARY

The scope of protection sought for various example embodiments of the invention is set out by the independent claims. The example embodiments and features, if any, described in this specification that do not fall under the scope of the independent claims are to be interpreted as examples useful for understanding various embodiments of the invention.

According to an example there is provided an apparatus configured to apply lower layer, that is layer 1 or layer 2, triggered mobility, said apparatus comprising: at least one processor; and at least one memory storing instructions that when executed by the at least one processor cause the apparatus at least to: receive a message from a network node indicating at least one lower layer mobility candidate cell; and attempt a switch to a target cell selected from one of said at least one candidate cell; and on determining that completion of said switch to said target cell is unsuccessful attempting completion of a further switch to a target cell selected from said at least one candidate cell.

Although lower layer triggered mobility may reduce latency, where a switch to a candidate cell fails, then a recovery mechanism may be needed and latency may increase. It was recognised that a further switch to a target cell may allow the apparatus, where the first switch to the target cell fails, to select a further candidate cell or try again at the same target cell and attempt to complete the switch to a target cell. This increases the chances of the switch to a candidate cell being successful and thereby helps reduce latency.

In some example embodiments, said message received from said network node comprises a plurality of candidate cells and said apparatus is caused to: on determining that completion of said switch to said target cell is unsuccessful to attempt completion of said further switch to a further target cell selected from said plurality of candidate cells.

A plurality of candidate cells may be indicated to the apparatus prior to the attempt to switch cell being performed and this may allow the apparatus, where the switch to the first target cell fails, to select a further candidate cell as a target cell and attempt to complete a switch to that target cell. This increases the chances of the switch to a candidate cell being successful and thereby helps reduce latency.

In some example embodiments, said step of attempting said switch to said target cell is performed in response to a cell switch command received as a lower layer message from a network node.

In some example embodiments, said lower layer message comprises a MAC CE (medium access control layer control element). In some other example embodiments, said lower layer message comprises a DCI (downlink control information) over PDCCH (physical downlink control channel).

In some example embodiments, said apparatus is further caused: in response to determining that said completion of said switch to said further target cell is unsuccessful, to attempt completion of a switch to a yet further target cell selected from said plurality of candidate cells.

In some example embodiments, said step of determining that completion of said switch to one of said target cells is unsuccessful comprises one of the following: determining a failure of a random access procedure, determining a synchronisation failure with said target cell, determining an expiry of a timer, or not receiving a response from said target cell within a first predetermined time.

In some example embodiments, said apparatus is further caused to continue attempting completion of a switch to a further target cell until one of the following: successful completion of said switch, a second predetermined time has elapsed, expiry of a second timer, or switches to a predetermined number of candidate cells has been attempted.

In some example embodiments, said apparatus is caused following one of: successful completion of said switch, a second predetermined time having elapsed, expiry of a second timer, or a switch to a predetermined number of candidate cells having been attempted to perform at least one of the following: enter idle mode and generate a message indicating a failure to switch to one of said lower layer mobility candidate cells.

In some example embodiments, said apparatus comprises a first timer and a second timer with said first and second timer being triggered in response to receipt of said cell switch command. The first timer timing up to the first predetermined time and the second timer timing up to the second predetermined time.

In some example embodiments, said step of attempting a switch to said target cell comprises detaching from a source cell and applying target cell configurations to said apparatus.

In some example embodiments, said apparatus comprises in response to receipt of said message indicating said plurality of candidate cells, preparing said apparatus for connection to at least some of said plurality of cells.

In some example embodiments, said step of preparing said apparatus for connection comprises performing downlink synchronisation and/or timing advance acquisition for the candidate cell.

In some example embodiments, receipt of the indication of the candidate cells prior to the cell switch command enables the apparatus to prepare the apparatus connection to at least some of the candidate cells in advance such that when the cell switch commend is received latencies for switching can be reduced as cells are already prepared and where a first attempt to a first target cell fails a subsequent attempt to complete a switch to a further target cell can be performed without the requirement for preparation steps or a random access procedure.

In some example embodiments, said step of completion of said switch to one of said target cells comprises receiving a signal from said target cell indicating said switch is successful.

In some example embodiments, said step of completion of said switch to one of said target cells further comprises performing a random access procedure to said one of said target cells prior to receiving said signal indicating said switch is successful.

In some example embodiments, where the candidate cell is not one that was prepared for connection and before an attempt to a connection to a first cell has been performed then a random access procedure may be performed for a target cell.

In some example embodiments, said apparatus is caused to attempt to complete a connection to a target cell by transmitting an indication to said cell that a switch is required and receiving a response that said switch is accepted. In some example embodiments, the indication may comprise one or more of a C-RNTI MAC CE (cell radio network temporary identity medium access control control element) or a RRC (radio resource control) reconfiguration complete message.

In some example embodiments, said apparatus is caused to perform: determining at least one of the following: a power or quality of a link with at least some of said plurality of candidate cells; and on determining that completion of said switch to said target cell is unsuccessful selecting one of said candidate cells as a further target cell in dependence upon said determined power or quality of said links with said candidate cells.

In some example embodiments said apparatus is caused to preferentially select said candidate cells providing said highest quality or power links.

In some example embodiments, said apparatus is caused to select one of said candidate cells for which said determined power or quality exceed a predetermined threshold.

In some example embodiments, said measured power or quality comprises layer 1 RSRP reference signal to received power, RSRQ reference signal to received quality, or SINR signal to interference and noise ratio.

In some example embodiments, said apparatus is caused to set said predetermined threshold in response to receipt of a configuration message from a network node.

In some example embodiments, said apparatus is caused to: determine at least one of the following: a power or quality of a link with at least some of said plurality of candidate cells; and report said at least one of power or quality of said link to said network; and on determining that completion of said switch to said target cell is unsuccessful selecting one of said candidate cells for which said quality of said link has been at least one of: determined or reported as a further target cell.

In some example embodiments, cells that have been reported to the network are those that are then prepared as candidate cells by the network.

In some example embodiments, said apparatus is caused to: select a candidate cell for which said apparatus has performed at least one of downlink synchronisation and timing advance acquisition as a further target cell.

In some example embodiments, said apparatus is caused to perform an initial step of receiving a configuration message from a network node indicating that said apparatus is to perform said steps of attempting completion to a further target cell in response to a switch to a target cell being unsuccessful.

In some example embodiments, said network has to explicitly allow the apparatus to perform the further switch and if that configuration is not received/not encoded by the network in the configuration of the candidate cells or the LTM command message, the apparatus will not attempt the further switch in case the LTM is unsuccessful.

In some example embodiments, said apparatus is further caused to: in response to receiving a configuration message from a network node, said configuration message indicating whether said apparatus is to attempt a further switch in response to said switch to a target cell being unsuccessful to perform one of the following: to attempt no further switch; to attempt one further switch to a target cell; or to attempt multiple further switches to multiple further target cells.

The apparatus is configured by the network to attempt LTM on one or more candidate target cells after LTM cell switch failure and to attempt LTM on the candidate target cell(s) where the UE has performed DL synchronization and/or TA acquisition. (it this is not configured the UE can attempt any candidate cells).

In some example embodiments, said apparatus comprises a user equipment.

According to various, but not necessarily all, example embodiments of the invention there is provided an apparatus comprising: at least one processor; and at least one memory storing instructions that when executed by the at least one processor cause the apparatus at least to: generate at least one configuration message for configuring a user equipment, said at least one configuration message being for configuring said user equipment to attempt completion of a further switch to a target cell selected from at least one candidate cell where a first switch to a target cell is unsuccessful.

In some example embodiments, said at least one configuration message is for configuring said user equipment to attempt completion of said further switch to a further target cell selected from a plurality of candidate cells where said first switch to said target cell is unsuccessful.

In some example embodiments a user equipment may not attempt a switch to a further target cell in response to failing to complete a cell switch unless it has been configured to do so by the network.

In some example embodiments, said at least one configuration message is for configuring said user equipment to attempt completion of a switch to multiple further target cells selected from said plurality of candidate cells where switches to previous target cells are unsuccessful.

In some example embodiments, said at least one configuration message comprises a power or quality threshold.

In some example embodiments, said at least one configuration message is for configuring said user equipment to select as potential further target cells, candidate cells where a determined power or quality of a link between said user equipment and said candidate cell is higher than said threshold.

In some example embodiments, said at least one configuration message is for configuring said user equipment to select as potential further target cells, candidate cells where said user equipment has performed at least one of downlink synchronisation and timing advance acquisition with said candidate cell.

In some example embodiments, said apparatus is caused to transmit said at least one configuration message towards said user equipment.

In some example embodiments, said apparatus comprises a network node.

According to various, but not necessarily all, example embodiments of the invention there is provided according to one aspect a method performed at an apparatus configured to apply lower layer, that is layer 1 or layer 2, triggered mobility, said method comprising: receiving a message from a network node indicating at least one lower layer mobility candidate cell; attempting a switch to a target cell selected from said at least one candidate cell; and on determining that completion of said switch to said target cell is unsuccessful attempting completion of a further switch to a target cell selected from said at least one candidate cell.

In some example embodiments, said at least one candidate cell comprises a plurality of candidate cells and on determining that completion of said switch to said target cell is unsuccessful said method attempts completion of said further switch to a further target cell selected from said plurality of candidate cell.

In some example embodiments, said step of attempting said switch is performed in response to receiving a cell switch command as a lower layer message from a network node.

In some example embodiments, said method further comprises in response to determining that said completion of said switch to said further target cell is unsuccessful, attempting completion of a switch to a yet further target cell selected from said plurality of candidate cells.

In some example embodiments, said method further comprises continuing attempting completion of a switch to a further target cell until one of the following: successful completion of said switch, a second predetermined time has elapsed or switches to a predetermined number of candidate cells has been attempted.

In some example embodiments, said method further comprises: following one of: successful completion of said switch, a second predetermined time having elapsed, a second timer having expired, or a switch to a predetermined number of candidate cells having been attempted performing at least one of the following: entering idle mode and generating a message indicating a failure to switch to one of said lower layer mobility candidate cells.

In some example embodiments, said step of attempting a switch to a target cell comprises detaching from a source cell and applying target cell configurations to said apparatus.

In some example embodiments, said method further comprises in response to receipt of said message indicating said plurality of candidate cells, preparing said apparatus for connection to at least some of said plurality of cells

In some example embodiments, said step of completion of said switch to one of said target cells comprises receiving a signal from said target cell indicating said switch is successful.

In some example embodiments, said step of completion of said switch to one of said target cells further comprises performing a random access procedure to said one of said target cells prior to receiving said signal indicating said switch is successful.

In some example embodiments, said method further comprises determining at least one of the following: a power or quality of a link with at least some of said plurality of candidate cells; and on determining that completion of said switch to said target cell is unsuccessful selecting one of said candidate cells as a further target cell in dependence upon said determined power or quality of said links with said candidate cells.

In some example embodiments, said method further comprises preferentially selecting said candidate cells providing said highest quality or power links.

In some example embodiments, said method further comprises selecting one of said candidate cells for which said determined power or quality exceed a predetermined threshold.

In some example embodiments, said method further comprises setting said predetermined threshold in response to receipt of a configuration message from a network node.

In some example embodiments, said method further comprises determining at least one of the following: a power or quality of a link with at least some of said plurality of candidate cells; and reporting said at least one of power or quality of said link to said network; and on determining that completion of said switch to said target cell is unsuccessful selecting one of said candidate cells for which said quality of said link has been determined and/or reported as a further target cell.

In some example embodiments, said method further comprises selecting a candidate cell for which said apparatus has performed at least one of downlink synchronisation and timing advance acquisition.

In some example embodiments, said method further comprises an initial step of receiving a configuration message from a network node indicating that said apparatus is to perform said steps of attempting completion to a further target cell in response to a switch to a target cell being unsuccessful.

According to various, but not necessarily all, example embodiments of the invention there is provided according to one further aspect, a method performed at an apparatus comprising: generating at least one configuration message for configuring a user equipment, said at least one configuration message being for configuring said user equipment to attempt completion of a further switch to a target cell selected from at least one candidate cell where a first switch to a target cell is unsuccessful.

In some example embodiments, said configuration message is for configuring said user equipment to attempt completion of said further switch to a further target cell selected from a plurality of candidate cells.

In some example embodiments, said method further comprises transmitting said at least one configuration message towards said user equipment.

According to various, but not necessarily all, example embodiments of the invention there is provided a computer program comprising instructions which, when executed by a processor on an apparatus cause the apparatus to perform a method according to one aspect.

According to various, but not necessarily all, example embodiments of the invention there is provided a computer program comprising instructions which, when executed by a processor on an apparatus cause the apparatus to perform a method according to one further aspect.

According to various, but not necessarily all, example embodiments of the invention there is provided a non-transitory computer readable medium comprising program instructions stored thereon for causing an apparatus to perform: a method according to one aspect or a method according to one further aspect.

According to various, but not necessarily all, example embodiments of the invention there is provided an apparatus configured to apply lower layer triggered mobility, said apparatus comprising: circuitry configured to receive a message from a network node indicating at least one lower layer mobility candidate cell; and mobility control circuitry configured to attempt a switch to a target cell selected from said at least one candidate cell, said mobility control circuitry being configured on determining that completion of said switch to said target cell is unsuccessful to attempt completion of a further switch to a target cell selected from said at least one candidate cell.

In some example embodiments, said at least one candidate cell comprises a plurality of candidate cells, said mobility control circuitry being configured on determining that completion of said switch to said target cell is unsuccessful to attempt completion of said further switch to a further target cell selected from said plurality of candidate cells.

In some example embodiments, said mobility control circuitry is configured to attempt said switch to said target cell is performed in response to receipt of a cell switch command received as a lower layer message from a network node.

In some example embodiments, said mobility control circuitry is configured: in response to determining that said completion of said switch to said further target cell is unsuccessful, to attempt completion of a switch to a yet further target cell selected from said plurality of candidate cells.

In some example embodiments, said mobility control circuitry is configured to continue attempting completion of a switch to a further target cell until one of the following: successful completion of said switch, a second predetermined time has elapsed or switches to a predetermined number of candidate cells has been attempted.

In some example embodiments, said mobility control circuitry is configured following one of: successful completion of said switch, a second predetermined time having elapsed or a switch to a predetermined number of candidate cells having been attempted to control said apparatus to perform at least one of the following: enter idle mode and generate a message indicating a failure to switch to one of said lower layer mobility candidate cells.

In some example embodiments, said mobility control circuitry is configured to attempt a switch to said target cell by detaching from a source cell and applying target cell configurations to said apparatus.

In some example embodiments, said mobility control circuitry is configured in response to receipt of said message indicating said plurality of candidate cells to prepare said apparatus for connection to at least some of said plurality of cells.

In some example embodiments, said mobility control circuitry is configured to prepare said apparatus for connection by performing downlink synchronisation and/or timing advance acquisition for the candidate cell.

In some example embodiments, said apparatus comprises monitoring circuitry configured to determine at least one of the following: a power or quality of a link with at least some of said plurality of candidate cells; said mobility control circuitry being configured on determining that completion of said switch to said target cell is unsuccessful to select one of said candidate cells as a further target cell in dependence upon said power or quality of said links with said candidate cells determined by said monitoring circuitry.

In some example embodiments said mobility control circuitry is configured to preferentially select said candidate cells providing said highest quality or power links.

In some example embodiments, said mobility control circuitry is configured to select one of said candidate cells for which said determined power or quality exceed a predetermined threshold.

In some example embodiments, mobility control circuitry is configured to set said predetermined threshold in response to receipt of a configuration message from a network node.

In some example embodiments, said monitoring circuitry is configured to determine at least one of the following: a power or quality of a link with at least some of said plurality of candidate cells; and report said at least one of power or quality of said link to said network; and mobility control circuitry is configured on determining that completion of said switch to said target cell is unsuccessful to select one of said candidate cells for which said quality of said link has been at least one of: determined or reported as a further target cell.

In some example embodiments, said mobility control circuitry is configured to select a candidate cell for which said apparatus has performed at least one of downlink synchronisation and timing advance acquisition as a further target cell.

In some example embodiments, said apparatus is configured to perform an initial step of receiving a configuration message from a network node indicating that said mobility control circuitry is to perform said steps of attempting completion to a further target cell in response to a switch to a target cell being unsuccessful.

According to various, but not necessarily all, example embodiments of the invention there is provided an apparatus comprising: circuitry configured to generate at least one configuration message for configuring a user equipment, said at least one configuration message being for configuring said user equipment to attempt completion of a further switch to a target cell selected from a at least one candidate cell where a first switch to a target cell is unsuccessful.

According to various, but not necessarily all, example embodiments of the invention there is provided according to one aspect an apparatus for applying lower layer triggered mobility, said apparatus comprising: means for receiving a message from a network node indicating at least one lower layer mobility candidate cells; means for switching to a target cell selected from one of said at least one candidate cells; said means for switching, being configured on determining that completion of said switch to said target cell is unsuccessful to attempt completion of a further switch to a target cell selected from said at least one candidate cell.

In some example embodiments, said at least one candidate cell comprises a plurality of candidate cells, said means for switching being configured on determining that completion of said switch to said target cell is unsuccessful to attempt completion of said further switch to a further target cell selected from said plurality of candidate cells.

In some example embodiments, said means for switching to a target cell is configured to attempt said switch in response to receiving a cell switch command as a lower layer message from a network node.

In some example embodiments, said means for switching is configured in response to determining that said completion of said switch to said further target cell is unsuccessful to attempt completion of a switch to a yet further target cell selected from said plurality of candidate cells.

In some example embodiments, said apparatus comprises monitoring means for determining at least one of the following: a power or quality of a link with at least some of said plurality of candidate cells; said means for switching being configured on determining that completion of said switch to said target cell is unsuccessful to select one of said candidate cells as a further target cell in dependence upon said determined power or quality of said links with said candidate cells.

In some example embodiments, said apparatus comprises monitoring means for determining at least one of the following: a power or quality of a link with at least some of said plurality of candidate cells; and means for reporting said at least one of power or quality of said link to said network; said means for switching being configured on determining that completion of said switch to said target cell is unsuccessful to select one of said candidate cells for which said quality of said link has been determined and/or reported as a further target cell.

In some example embodiments, said apparatus further comprises means for receiving a configuration message from a network node indicating that said apparatus is to attempt completion to a further target cell in response to a switch to a target cell being unsuccessful.

According to various, but not necessarily all, example embodiments of the invention there is provided according to one further aspect, an apparatus comprising: means for generating at least one configuration message for configuring a user equipment, said at least one configuration message being for configuring said user equipment to attempt completion of a further switch to a target cell selected from at least one candidate cell where a first switch to a target cell is unsuccessful.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION

Some example embodiments will now be described with reference to the accompanying drawings in which:
FIG. 1 illustrates a signal diagram of a procedure for lower layer triggered mobility;
Fig.2 illustrates a signal diagram of a procedure for lower layer triggered mobility where an attempted cell switch fails according to an embodiment; and
Fig. 3 schematically shows a user equipment and network node according to an embodiment.

### DETAILED DESCRIPTION

Before discussing the example embodiments in any more detail, first an overview will be provided.

Embodiments are concerned with lower layer triggered mobility LTM for a user equipment moving through a communication network with multiple network nodes supporting radio coverage in multiple cells. Each network node supports radio coverage in one or more cells and a user equipment will switch between cells as it moves. Lower Layer triggered Mobility (LTM), marked also as L1/2 inter-cell mobility, is an upcoming objective to enhance mobility and may be used in new radio networks. According to the paradigm, the decision about the cell change is based on layer 1 measurements (physical layer) and is made at the L2 MAC (medium access control) layer. In a network comprising gNBs that may have a central unit and one or more distributed units, the decision about the cell change may be made in the Distributed Unit or node (DU).

When the UE moves from the coverage area of one cell to another cell, at some point a serving cell change needs to be performed. Without lower level mobility a serving cell change is triggered by L3 measurements and is done by RRC signalling triggered Reconfiguration with Synchronisation for change of PCell (primary cell) and PSCell, (primary serving cell) as well as release add for SCells (secondary cells) when applicable. All cases involve complete L2 (and L1) resets, leading to longer latency, larger overhead and longer interruption time than beam switch mobility. The goal of L1/L2 mobility enhancements is to enable a serving cell change via L1/L2 signalling, in order to reduce the latency, overhead and interruption time.

In embodiments the network provides configuration information to the UE that includes configuration information for one or multiple LTM candidate target cells. In embodiments the UE stores the configuration of the LTM candidate target cell(s). The UE may then perform DL (downlink) synchronization and TA (timing advance) acquisition with candidate target cell(s) from the list before receiving the LTM cell switch command from the network, so that once the command is received the UE is prepared to complete a switch to a selected one of multiple target cells.

The network node which may be a gNB, may in response to a measurement report from the UE decide to execute LTM cell switch to a target cell, and transmit a MAC CE (medium access control element) command which triggers the UE to start the LTM cell switch. The command may be a message that includes an indication of the target cell for the switch which may be in the form of the candidate configuration index of the target cell. If the attempted cell switch to the target cell fails, a recovery mechanism which comprises attempting connection/switching to another of the candidate cells is performed to further decrease latency and UE battery consumption. As DL synchronisation and TA acquisition has already been been completed for a further target cell this can be done in a low latency manner without the need to perform a full random access procedure. Alternatively the connection to the original target cell may be attempted again as the UE may have moved and it may now be possible.

In some embodiments this response of seeking to switch to a further candidate cell may be performed multiple times to multiple candidate target cells which can be already prepared i.e. UE context is available, in circumstances where multiple switch failures occurs.

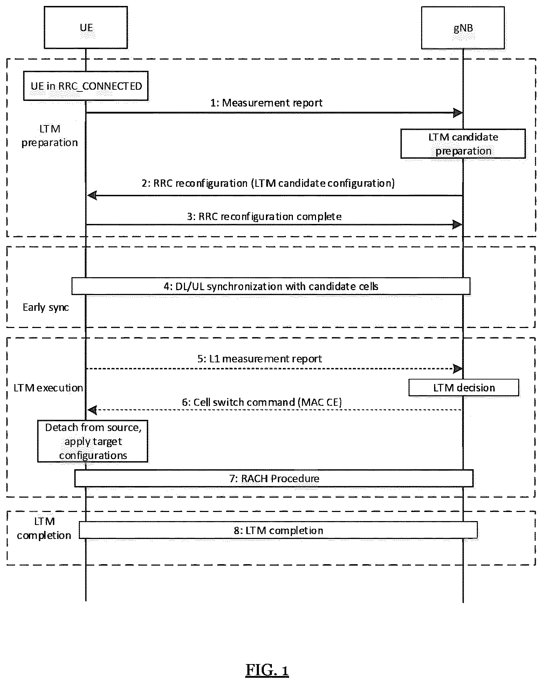

Fig. 1 shows a signalling procedure for LTM, which is as follows:
1. The UE sends a MeasurementReport message to the gNB. The gNB decides to use LTM and initiates LTM candidate preparation.
2. The gNB transmits an RRCReconfiguration message to the UE including the configuration of one or multiple LTM candidate target cells.
3. The UE stores the configuration of LTM candidate target cell(s) and transmits a RRCReconfigurationComplete message to the gNB.
4. The UE may perform DL synchronization and TA acquisition with candidate target cell(s) before receiving the LTM cell switch command.

DL synchronization for candidate cell(s) before cell switch command may be supported, at least based on SSB synchronisation signal block.

TA acquisition of candidate cell(s) before LTM cell switch command may be supported, at least based on PDCCH (physical downlink control channel) ordered RACH (random access channel), where the PDCCH order is only triggered by source cell.

5. The UE performs L1 measurements on the configured LTM candidate target cell(s) and transmits lower-layer measurement reports to the gNB. The lower-layer measurement reports may be carried on L1 or MAC.

6. The gNB decides to execute LTM cell switch to a target cell and transmits a MAC CE triggering LTM cell switch by including the candidate configuration index of the target cell. The UE switches to the configuration of the LTM candidate target cell.

7. The UE performs random access procedure towards the target cell, in the case that TA and/or DL synchronisation is not available.

8. The UE indicates successful completion of the LTM cell switch towards the target cell. The UE may indicate successful completion either using an uplink signal or a message after the UE has switched to the target cell may be used to indicate successful completion of the LTM cell switch.

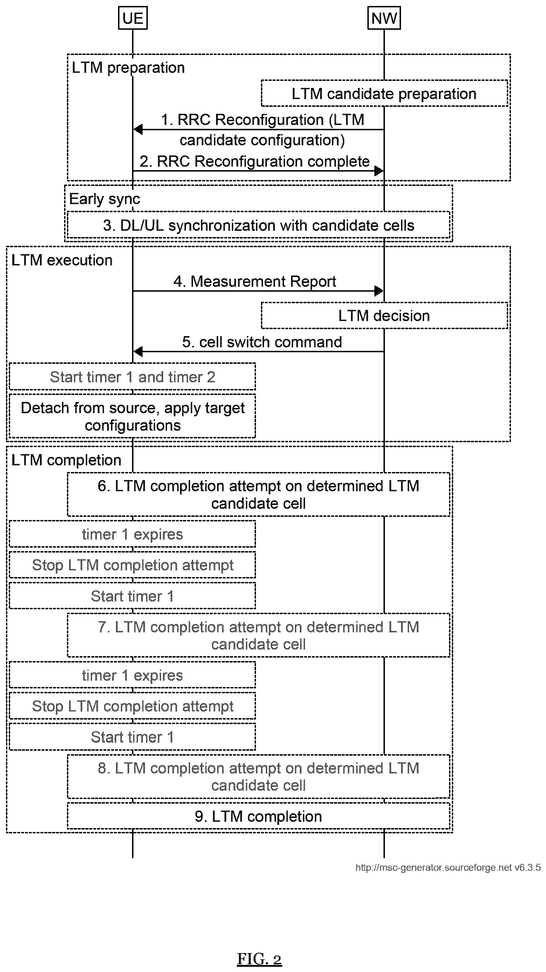

Fig.2 shows the signalling performed where the LTM switch to a first target cell is unsuccessful according to an embodiment.

Fig.2 shows the network performing LTM candidate preparation and then transmitting at message 1 the LTM candidate configuration information to the UE as part of a RRC reconfiguration message. The UE receives this information, stores it and indicates RRC reconfiguration complete to the network with a RRC reconfiguration complete message 2. Early synchronisation may then be performed at the UE where at step 3 downlink/uplink synchronisation with some or all of the candidate cells is performed.

The LTM execution then commences and the UE transmits a measurement report indicating the quality and/or power of links with at least one of the candidate cells to the network in message 4. In dependence upon this, the network makes a LTM decision and transmits a cell switch command at message 5 that indicates one of the candidate cells to be a target cell for a cell switch. In response to this the UE starts timer 1 and timer 2, detaches from the source cell and applies a configuration of the indicated target cell and attempts to switch to this cell. At step 6 the UE attempts completion of the switch to the candidate cell, this involves the UE transmitting a message to the candidate cell indicating a request to connect and the candidate cell responding to accept the UE's request. The UE may then send a successful completion indication to the network node as an uplink signal or message. If the UE does not receive a response from the candidate target cell within the time period of timer 1 then the LTM completion attempt stops and timer 1 is restarted.

At this point the UE will attempt completion of an LTM connection with a further candidate cell from the list of candidate cells. It will attempt this by applying the configuration of the new target cell and transmits a switch request message. The cell selected by the UE will be from the list of candidate cells and is one where downlink synchronisation has already been prepared. In some embodiments the cell selected may be one where the quality and/or power of the link is determined to be above a threshold value. If the completion to the switch to the subsequent target candidate cell does not complete before timer 1 expires again then the attempt is stopped and timer 1 is started again and an attempt to complete connection to a further candidate cell again selected from the list of candidate cell and selected perhaps based on one where downlink synchronisation has already been performed and the quality of the link is above a predetermined threshold. If in this case at step S8 the attempt is successful then at step S9 LTM completion occurs and the UE has successfully switched to a target cell using lower layer signalling, albeit at the third attempt. If this completion does not occur within timer 1 then a further attempt may be attempted for a further candidate cell. This will continue until timer 2 expires, whereupon the UE may stop attempting and may in some embodiments switch to idle mode and/or send a signal indicating that it has not successfully switched cell.

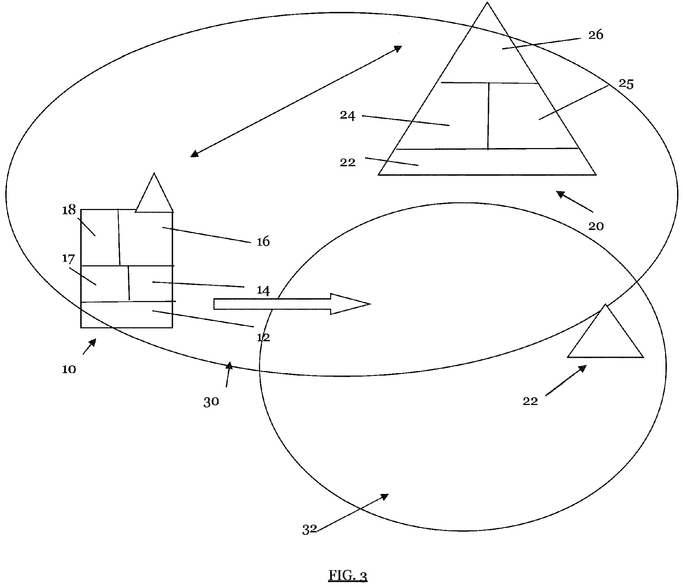

Fig. 3 shows a UE 10 and a network node 20 according to an embodiment. UE 10 comprises monitoring circuitry 18 for monitoring the power and/or quality of links between the UE 10 and neighbouring cells 32 supported by other network nodes 22. UE 10 also comprises a data store 12 for storing candidate cell information received from the network node 20, timers 14 and mobility control circuitry 17 for controlling switching between cells. There is also transmitting and receiving circuitry 16 for transmitting and receiving messages comprising information and data to a network node 20. These messages may include measurement reports generated by monitoring circuitry 18 indicating the quality and/or power of links to one or more neighbouring cells and they may include cell switch request messages generated by mobility control circuitry 17 and sent by transmitting circuitry 16 to a target cell to which it wishes to connect.

The timers 14 may be triggered to allow certain processes to be time constrained such that where mobility control circuitry 17 tries to complete a switch to a target cell if does so within a time indicated by a first timer and where this is not successful in this time, it may try a switch to a further cell and reset the first timer. A second timer may be used such that all of the attempts to switch to a target cell should be completed within the second predetermined time and where this does not occur then the UE may stop the attempts and perhaps switch to idle mode.

Network node 20 comprises a data store 22, transmitting and receiving circuitry 26 for transmitting and receiving messages with the user equipment and circuitry 24 for determining neighbouring cells for which locally triggered mobility may be appropriate and for preparing these candidate cells. Message generation circuitry 25 generates a message comprising configuration information for the multiple candidate cells identified by circuitry 24 and a configuration message for configuring the user equipment to attempt completion of a switch to a further target cell selected from the multiple candidate cells where a switch to a first target cell is unsuccessful. Transmitting circuitry 26 transmits these messages to the UE. In response to receipt of a measurement report from the UE indicating the power and/or quality of a link to one or more of the candidate cells, the network node may determine that a cell switch is appropriate and generate and transmit a cell switch command to the UE 10.

In summary the lower layer triggered mobility or embodiments may include one or more of the examples given below.

In one example the UE can attempt LTM completion on multiple LTM candidate target cell(s).

In one example the UE can attempt LTM completion LTM candidate target cell(s) after LTM cell switch failure on the target cell(s).

In one example a second or failure attempt LTM timer is started when UE starts the switching process to an LTM candidate target cell(s) or upon a first LTM cell switch failure being declared. When LTM timer is running the UE is allowed to attempt LTM completion on further LTM candidate target cell(s). When second LTM timer expires the UE initiates one or more of the following: cell selection procedure, RRC Re-Establishment procedure, actions upon going to IDLE, reporting of LTM cell switch failure, or reporting of SCG (secondary cell group) failure (in case the LTM is attempted for PSCell (primary serving cell). IN one example there is a first timer that is set for each LTM completion attempt, the attempt to a particular target cell continuing until success or expiry of the first timer.

In one example the UE attempts to complete LTM on the configured LTM candidate target cell(s) after LTM cell switch failure when one or more LTM candidate target cell(s) fulfil at least one measurement power/quality threshold or on the cell(s) which are already reported (e.g. measurement reporting event) being fulfilled by the UE. In one option, the at least one measurement power or quality threshold is (L1) RSRP threshold or a RSRQ threshold or a SINR threshold.

In one example the UE attempts to complete LTM after LTM cell switch failure occurred on the configured LTM candidate target cell or set of cells for which UE has measured and/or reported to the NW.

According to the invention, the UE attempts to complete LTM after LTM cell switch failure occurred on the candidate target cell(s) where the UE has performed DL synchronization and/or TA acquisition and/or where the UE has valid TA (e.g., based on LTM configuration information). In one example the UE is allowed to attempt LTM on a certain number of LTM candidate target cells, and in some embodiments the number is configured by the NW.

In one example UE attempts to complete LTM on the configured LTM candidate target cell(s) by performing random access procedure towards the target cell, if TA is not available.

In one example UE attempts to complete LTM on the configured LTM candidate target cell(s) by indicating successful completion of the LTM cell switch towards target cell. Indication can be an uplink signal or message.

In one example NW configures the UE to attempt LTM after LTM cell switch failure.

In one example NW configures the UE to attempt LTM on one or more candidate target cells after LTM cell switch failure.

In one example NW configures to the UE the quality thresholds based on which UE evaluates whether it can attempt LTM on one or more candidate target cells after LTM cell switch failure.

According to the invention, NW configures the UE to attempt LTM on the candidate target cell(s) where the UE has performed DL synchronization and/or TA acquisition.

In one example the UE determines that LTM cell switch failure has occurred upon at least one of: RA (random access) failure on the target cell, synchronization failure on the target cell, a configured timer expires, etc.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods. The tern non-transitory as used herein, is a limitation of the medium itself (i.e., tangible, not a signal) as opposed to a limitation on data storage persistency (e.g. RAM vs ROM).

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device. Although example embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of as disclosed in the appended claims.

## Claims

1. An apparatus configured to apply Layer1/Layer2-triggered mobility, LTM, said apparatus comprising:
at least one processor; and
at least one memory storing instructions that when executed by the at least one processor cause the apparatus at least to:
receive a message from a network node indicating a plurality of LTM candidate cells; and
attempt an LTM switch to a target cell selected from said plurality of LTM candidate cells; and
on determining that completion of said switch to said target cell is unsuccessful attempting a further LTM switch to a further LTM target cell selected from said plurality of LTM candidate cells, **characterized in that** the selected further LTM candidate cell is one for which said apparatus has performed downlink synchronisation.

2. An apparatus according to claim 1, said apparatus being further caused to: in response to determining that said completion of said LTM switch to said further target cell is unsuccessful attempt completion of a LTM switch to a yet further target cell selected from said plurality of LTM candidate cells.

3. An apparatus according to any preceding claim, wherein said step of determining that completion of said LTM switch to one of said target cells is unsuccessful comprises one of the following: determining a failure of a random access procedure, determining a synchronisation failure with said target cell, determining an expiry of a timer, or not receiving a response from said target cell within a first predetermined time.

4. An apparatus according to any preceding claim, said apparatus being further caused to continue attempting a further LTM switch to a target cell until one of the following: successful completion of said LTM switch, a second predetermined time has elapsed or switches to a predetermined number of candidate cells have been attempted.

5. An apparatus according to any preceding claims, said apparatus being caused following one of: successful completion of said LTM switch, a second predetermined time having elapsed or a switch to a predetermined number of candidate cells having been attempted to perform at least one of the following: enter idle mode and generate a message indicating a failure to switch to one of said LTM candidate cells.

6. An apparatus according to any preceding claim, wherein said step of attempting an LTM switch to said target cell comprises detaching from a source cell and applying target cell configurations to said apparatus.

7. An apparatus according to any preceding claim, comprising in response to receipt of said message indicating said plurality of candidate cells, performing said downlink synchronization to at least some of said plurality of cells

8. An apparatus according to any preceding claim, wherein said step of completion of said LTM switch to one of said target cells comprises receiving a signal from said target cell indicating said switch is successful.

9. An apparatus according to claim 8, wherein said step of completion of said LTM switch to one of said target cells further comprises performing a random access procedure to said one of said target cells prior to receiving said signal indicating said switch is successful.

10. A method performed at an apparatus configured to apply Layer1/Layer2-triggered mobility, LTM, said method comprising:
receiving a message from a network node indicating a plurality of LTM candidate cells;
attempting an LTM switch to a target cell selected from the plurality of candidate cells; and
on determining that completion of said LTM switch to said target cell is unsuccessful, attempting completion of a further LTM switch to a further target cell selected from said plurality of candidate cells, **characterized in that** the selected further LTM candidate cell is one for which said apparatus has performed downlink synchronisation.

## Patentansprüche

1. Vorrichtung, die konfiguriert ist, um eine Layer-1/Layer-2-ausgelöste Mobilität, LTM, anzuwenden, wobei die Vorrichtung umfasst:
mindestens einen Prozessor; und
mindestens einen Speicher, der Anweisungen speichert, die bei Ausführung durch den mindestens einen Prozessor die Vorrichtung zumindest zu Folgendem veranlassen:
Empfangen einer Nachricht von einem Netzwerkknoten, die eine Vielzahl von LTM-Kandidatenzellen anzeigt; und
Versuchen eines LTM-Wechsels zu einer Zielzelle, die aus der Vielzahl von LTM-Kandidatenzellen ausgewählt ist; und
bei Feststellung, dass ein Abschluss des Wechsels zu der Zielzelle nicht erfolgreich ist, Versuchen eines weiteren LTM-Wechsels zu einer weiteren LTM-Zielzelle, die aus der Vielzahl von LTM-Kandidatenzellen ausgewählt ist, **dadurch gekennzeichnet, dass** die ausgewählte weitere LTM-Kandidatenzelle eine Zelle ist, für die die Vorrichtung eine Downlink-Synchronisation durchgeführt hat.

2. Vorrichtung nach Anspruch 1, wobei die Vorrichtung ferner veranlasst wird zu: als Reaktion auf ein Feststellen, dass der Abschluss des LTM-Wechsels zu der weiteren Zielzelle nicht erfolgreich ist, Versuchen eines Abschlusses eines LTM-Wechsels zu einer noch weiteren Zielzelle, die aus der Vielzahl von LTM-Kandidatenzellen ausgewählt ist.

3. Vorrichtung nach einem der vorhergehenden Ansprüche, wobei der Schritt des Feststellens, dass der Abschluss des LTM-Wechsels zu einer der Zielzellen nicht erfolgreich ist, eines der Folgenden umfasst: Feststellen eines Fehlschlags eines Direktzugriffsverfahrens, Feststellen eines Synchronisationsfehlers mit der Zielzelle, Feststellen eines Ablaufs eines Zeitgebers oder Nichtempfangen einer Antwort von der Zielzelle innerhalb einer ersten vorbestimmten Zeit.

4. Vorrichtung nach einem der vorhergehenden Ansprüche, wobei die Vorrichtung ferner veranlasst wird, weiterhin einen weiteren LTM-Wechsel zu einer Zielzelle zu versuchen, bis eines der Folgenden eintritt: ein erfolgreicher Abschluss des LTM-Wechsels, eine zweite vorbestimmte Zeit ist verstrichen oder es wurden Wechsel zu einer vorbestimmten Anzahl von Kandidatenzellen versucht.

5. Vorrichtung nach einem der vorhergehenden Ansprüche, wobei die Vorrichtung veranlasst wird, im Anschluss an eines von: einem erfolgreichen Abschluss des LTM-Wechsels, einem Verstreichen einer zweiten vorbestimmten Zeit oder einem Versuch eines Wechsels zu einer vorbestimmten Anzahl von Kandidatenzellen, mindestens eines der Folgenden durchzuführen: in einen Ruhemodus einzutreten und eine Nachricht zu erzeugen, die einen Fehlschlag eines Wechsels zu einer der LTM-Kandidatenzellen anzeigt.

6. Vorrichtung nach einem der vorhergehenden Ansprüche, wobei der Schritt des Versuchens eines LTM-Wechsels zu der Zielzelle ein Trennen von einer Quellzelle und ein Anwenden von Zielzellenkonfigurationen auf die Vorrichtung umfasst.

7. Vorrichtung nach einem der vorhergehenden Ansprüche, umfassend, als Reaktion auf einen Empfang der Nachricht, die die Vielzahl von Kandidatenzellen anzeigt, ein Durchführen der Downlink-Synchronisation zu zumindest einigen der Vielzahl von Zellen

8. Vorrichtung nach einem der vorhergehenden Ansprüche, wobei der Schritt des Abschlusses des LTM-Wechsels zu einer der Zielzellen ein Empfangen eines Signals von der Zielzelle umfasst, das anzeigt, dass der Wechsel erfolgreich ist.

9. Vorrichtung nach Anspruch 8, wobei der Schritt des Abschlusses des LTM-Wechsels zu einer der Zielzellen ferner ein Durchführen eines Direktzugriffsverfahrens zu der einen der Zielzellen umfasst, bevor das Signal empfangen wird, das anzeigt, dass der Wechsel erfolgreich ist.

10. Verfahren, das an einer Vorrichtung durchgeführt wird, die konfiguriert ist, um eine Layer-1/Layer-2-ausgelöste Mobilität, LTM, anzuwenden, wobei das Verfahren umfasst:
Empfangen einer Nachricht von einem Netzwerkknoten, die eine Vielzahl von LTM-Kandidatenzellen anzeigt;
Versuchen eines LTM-Wechsels zu einer Zielzelle, die aus der Vielzahl von Kandidatenzellen ausgewählt ist; und
bei Feststellung, dass ein Abschluss des LTM-Wechsels zu der Zielzelle nicht erfolgreich ist, Versuchen eines Abschlusses eines weiteren LTM-Wechsels zu einer weiteren Zielzelle, die aus der Vielzahl von Kandidatenzellen ausgewählt ist, **dadurch gekennzeichnet, dass** die ausgewählte weitere LTM-Kandidatenzelle eine Zelle ist, für die die Vorrichtung eine Downlink-Synchronisation durchgeführt hat.

## Revendications

1. Appareil configuré pour appliquer une mobilité déclenchée par la couche 1/la couche 2, LTM, ledit appareil comprenant :
au moins un processeur ; et
au moins une mémoire stockant des instructions qui, lorsqu'elles sont exécutées par l'au moins un processeur, amènent l'appareil au moins à :
recevoir un message en provenance d'un nœud de réseau indiquant une pluralité de cellules candidates LTM ; et
tenter une commutation LTM vers une cellule cible sélectionnée parmi ladite pluralité de cellules candidates LTM ; et
lorsqu'il est déterminé que l'achèvement de ladite commutation vers ladite cellule cible échoue, tenter une autre commutation LTM vers une autre cellule cible LTM sélectionnée parmi ladite pluralité de cellules candidates LTM, **caractérisé en ce que** l'autre cellule candidate LTM sélectionnée est une cellule pour laquelle ledit appareil a réalisé une synchronisation en liaison descendante.

2. Appareil selon la revendication 1, ledit appareil étant en outre amené à : en réponse à la détermination que ledit achèvement de ladite commutation LTM vers ladite autre cellule cible échoue, tenter l'achèvement d'une commutation LTM vers encore une autre cellule cible sélectionnée parmi ladite pluralité de cellules candidates LTM.

3. Appareil selon l'une quelconque des revendications précédentes, dans lequel ladite étape de détermination que l'achèvement de ladite commutation LTM vers l'une desdites cellules cibles échoue comprend l'une des opérations suivantes : déterminer un échec d'une procédure d'accès aléatoire, déterminer un échec de synchronisation avec ladite cellule cible, déterminer une expiration d'un temporisateur, ou ne pas recevoir de réponse de ladite cellule cible dans un premier délai prédéterminé.

4. Appareil selon l'une quelconque des revendications précédentes, ledit appareil étant en outre amené à continuer de tenter une autre commutation LTM vers une cellule cible jusqu'à l'une des situations suivantes : un achèvement réussi de ladite commutation LTM, un second délai prédéterminé s'est écoulé ou des commutations vers un nombre prédéterminé de cellules candidates ont été tentées.

5. Appareil selon l'une quelconque des revendications précédentes, ledit appareil étant amené, à la suite de l'une des situations suivantes : un achèvement réussi de ladite commutation LTM, un second délai prédéterminé s'étant écoulé ou une commutation vers un nombre prédéterminé de cellules candidates ayant été tentée, à réaliser au moins l'une des opérations suivantes : passer en mode veille et générer un message indiquant un échec de commutation vers l'une desdites cellules candidates LTM.

6. Appareil selon l'une quelconque des revendications précédentes, dans lequel ladite étape de tentative d'une commutation LTM vers ladite cellule cible comprend le fait de se détacher d'une cellule source et d'appliquer des configurations de cellule cible audit appareil.

7. Appareil selon l'une quelconque des revendications précédentes, comprenant, en réponse à la réception dudit message indiquant ladite pluralité de cellules candidates, la réalisation de ladite synchronisation en liaison descendante vers au moins certaines de ladite pluralité de cellules

8. Appareil selon l'une quelconque des revendications précédentes, dans lequel ladite étape d'achèvement de ladite commutation LTM vers l'une desdites cellules cibles comprend la réception d'un signal en provenance de ladite cellule cible indiquant que ladite commutation est réussie.

9. Appareil selon la revendication 8, dans lequel ladite étape d'achèvement de ladite commutation LTM vers l'une desdites cellules cibles comprend en outre la réalisation d'une procédure d'accès aléatoire vers ladite une desdites cellules cibles avant la réception dudit signal indiquant que ladite commutation est réussie.

10. Procédé réalisé au niveau d'un appareil configuré pour appliquer une mobilité déclenchée par la couche 1/la couche 2, LTM, ledit procédé comprenant :
la réception d'un message en provenance d'un nœud de réseau indiquant une pluralité de cellules candidates LTM ;
la tentative d'une commutation LTM vers une cellule cible sélectionnée parmi la pluralité de cellules candidates ; et
lorsqu'il est déterminé que l'achèvement de ladite commutation LTM vers ladite cellule cible échoue, la tentative d'achèvement d'une autre commutation LTM vers une autre cellule cible sélectionnée parmi ladite pluralité de cellules candidates, **caractérisé en ce que** l'autre cellule candidate LTM sélectionnée est une cellule pour laquelle ledit appareil a réalisé une synchronisation en liaison descendante.
